# EUROPÄISCHE PATENTSCHRIFT

(11) **EP 3 143 293 B1**
(45) Veröffentlichungstag und Bekanntmachung des Hinweises auf die Patenterteilung: **29.07.2020**
(21) Anmeldenummer: 15723644.9
(22) Anmeldetag: 14.04.2015
(51) Int. Cl.: F16B 21/09, F16B 37/04

(54) **VORRICHTUNG MIT MUTTER UND HALTEMITTEL**
DEVICE COMPRISING A NUT AND RETAINER MEANS
DISPOSITIF COMPORTANT UN ÉCROU ET UN ÉLÉMENT DE RETENUE

(30) Priorität: 15.05.2014 DE 102014007061
(43) Veröffentlichungstag der Anmeldung: 22.03.2017
(73) Patentinhaber: SEW-EURODRIVE GmbH & Co. KG, 76646 Bruchsal (DE)
(72) Erfinder: BÜHN, Oliver, 76703 Kraichtal (DE); ZIEGER, Andreas, 68753 Waghäusel (DE); BURKHARDT, Rita, 76684 Tiefenbach (DE)
(86) Internationale Anmeldenummer: PCT/EP2015/000774
(87) Internationale Veröffentlichungsnummer: WO 2015/172861

(56) Entgegenhaltungen:
- WO-A1-01/42063
- FR-A1- 2 726 866
- US-A- 3 406 433
- US-A- 3 700 020

## Beschreibung

Die Erfindung betrifft eine Vorrichtung mit Mutter und Haltemittel.

Es ist allgemein bekannt, dass mit einem einen Kranhaken umfassenden Kran Vorrichtungen transportierbar sind, wenn der Kranhaken mit der Vorrichtung verbindbar ist.

**Aus der** US 3 700 020 A **ist als nächstliegender Stand der Technik eine feste Verankerung für einen Bolzen bekannt.**

**Aus der** FR 2 726 866 A1 **ist eine Befestigung eines Karosserieteils bekannt.**

**Aus der** US 3 406 433 A **ist eine Ankopplung für einen Sitzgurt bekannt.**

**Aus der** WO 01 / 42063 A1 **ist eine Befestigungseinrichtung mit Federsicherung für einen Sicherheitsgurtanschlag bekannt.**

Der Erfindung liegt daher die Aufgabe zugrunde, eine Vorrichtung einfach transportierbar zu gestalten, insbesondere wobei die Lackierung der Vorrichtung qualitativ hochwertig sein soll.

Erfindungsgemäß wird die Aufgabe bei der Vorrichtung mit Mutter und Haltemittel nach den in Anspruch 1 angegebenen Merkmalen gelöst.

Wichtige Merkmale der Erfindung bei der Vorrichtung mit Mutter und Haltemittel sind,
dass die Mutter mit der Vorrichtung verbunden ist, insbesondere mit einem Gewindestift der Vorrichtung schraubverbunden ist,
**wobei** das Haltemittel eine Öse für einen Transporthaken und eine weitere Ausnehmung aufweist,
wobei die Mutter eine umlaufende Nut, insbesondere Einstich, aufweist,
wobei die Mutter durch die weitere Ausnehmung hindurchragt,
der von der Berandung der weiteren Ausnehmung überdeckte axiale Bereich von dem von der umlaufenden Nut überdeckten axialen Bereich umfasst ist,
wobei die axiale Richtung die Achse des Innengewindes der Mutter ist.

Von Vorteil ist dabei, dass das Haltemittel mit der Mutter verliersicher verbindbar ist. Außerdem ist bei Belastung der Nutboden mit einem Abschnitt der Berandung der weiteren Ausnehmung in Berührung. Bei Entlastung hingegen ist ein anderer Abschnitt der Berandung mit dem Nutboden in Berührung. Somit ist bei Belastung ein Gleitlager und bei Entlastung eine Verkeilung ausführbar. Auf diese Weise ist bei Entlastung das Haltemittel von der Mutter in Position haltbar. Bei Belastung hingegen ist ein Rotationsfreiheitsgrad bewirkbar.

Beim Durchlaufen eines Lackierbades ist somit das Haltemittel in seiner Position gehalten und somit der Lackierschatten vermeidbar. Somit ist die Lackierung der Vorrichtung qualitativ hochwertig ausführbar.

Bei einer vorteilhaften Ausgestaltung ist insbesondere bei Belastung, also unter Wirkung einer auf die Mutter wirkenden, von der Öse weg gerichteten Kraft, der Nutboden gleitgelagert in einem Abschnitt der Berandung der weiteren Ausnehmung, insbesondere so dass ein Drehlager gebildet ist, wobei die Drehachse der Schraubgewindeachse des Innengewindes der Mutter entspricht. Von Vorteil ist dabei, dass bei Belastung eine Drehbewegung der transportierten Last ermöglicht ist.

Erfindungsgemäß ist der von der Nut überdeckte axiale Bereich größer als die Wandstärke, insbesondere Blechdicke oder Blechstärke, des Haltemittels. Von Vorteil ist dabei, dass das Haltemittel in der Nut haltbar ist, wobei ein axiales Spiel vorsehbar ist, insbesondere zur Verringerung der Reibung

Bei einer vorteilhaften Ausgestaltung ist der Außensechskantabschnitt der Mutter auf der von der Vorrichtung abgewandten Seite angeordnet. Von Vorteil ist dabei, dass die Betätigung der Mutter, also das Anschrauben der Mutter auf den Gewindestift der Vorrichtung, in einfacher Weise ausführbar ist, wobei genügend Raum für Betätigung des Werkzeugs vorhanden ist.

Bei einer vorteilhaften Ausgestaltung ist der Nutboden außenpolygonal ausgeformt, insbesondere wobei mehr als sechs Ecken vorgesehen sind, oder kreisrund ausgeformt ist. Von Vorteil ist dabei, dass eine Gleitlagerung mittels der Ecken erreichbar ist, wenn diese einen Abschnitt der Berandung der weiteren Ausnehmung berühren. Hierzu ist der Abschnitt ein Kreisabschnitt, da das Polygon vorzugsweise ein regelmäßiges Polygon ist.

Bei einer vorteilhaften Ausgestaltung weist die Mutter einen oder mehrere Bundabschnitte auf zwischen denen die umlaufende Nut angeordnet ist,
insbesondere wobei die Bundabschnitte zumindest abschnittsweise radial weiter ausgedehnt sind als die weitere Ausnehmung des Haltemittels. Von Vorteil ist dabei, dass die Mutter mittels der verbreiterten Bundabschnitte verliersicher gehalten ist, indem sie axial begrenzt ist.

Bei einer vorteilhaften Ausgestaltung ist die weitere Ausnehmung kreisförmig, ovalförmig oder derart ausgeführt ist, dass ein erster Kreisabschnitt und ein zweiter Kreisabschnitt mittels zumindest eines Übergangsbereichs verbunden sind, wobei der Radius des zweiten Kreisabschnitts kleiner ist als der Radius des ersten Kreisabschnitts. Von Vorteil ist dabei, dass eine einfache Herstellung ermöglicht ist und der Übergangsbereich zumindest einen Abschnitt enthält, der parallel ausgerichtet ist zu einem Kantenabschnitt des polygonalen Nutbodens.

Bei einer vorteilhaften Ausgestaltung ist die weitere Ausnehmung als Innensechskant ausgeführt,
insbesondere wobei der Außensechskantabschnitt der Mutter axial durch den Innensechskantabschnitt hindurchführbar ist,
insbesondere wobei die Mutter einen weiteren Außensechskantabschnitt aufweist, der von dem ersten mittels der umlaufenden Nut getrennt ist, insbesondere und denselben Verlauf des maximalen Radialabstandes als Funktion des Umfangswinkels aufweist. Von Vorteil ist dabei, dass die Mutter in einfacher Weise einführbar oder durchführbar durch die weitere Ausnehmung ist.

Erfindungsgemäß ist am Haltemittel ein Schiebeteil verschiebbar angeordnet, wobei das Schiebeteil zwischen zwei parallel zueinander ausgeformten Abschnitten der Berandung der weiteren Ausnehmung geführt ist, wobei das Schiebeteil einen Schieberabschnitt aufweist, der zwei Griffbereiche, insbesondere Griffabschnitte, voneinander beabstandet, wobei die Griffbereiche das Schiebeteil am Haltemittel axial sichern und/oder begrenzen. Von Vorteil ist dabei, dass eine Verriegelung der Mutter steuerbar ist, indem das Schiebeteil mittels der Griffbereiche betätigt wird oder nicht.

Erfindungsgemäß ist das Schiebeteil in einer ersten Position radial beabstandet von der Mutter, insbesondere wobei der von der Mutter überdeckte Radialabstandsbereich beabstandet ist von dem vom Schiebeteil überdeckten Radialabstandsbereich,
und dass das Schiebeteil in einer zweiten Position eingreift in die umlaufende Nut, insbesondere in den Einstich, insbesondere zur Bildung einer axialen Sicherung der Mutter am Haltemittel. Von Vorteil ist dabei, dass die Verriegelung in einfacher Weise durch eine Hin- und Herbewegung steuerbar ist.

Bei einer vorteilhaften Ausgestaltung sind zwei Gehäuseteile mittels zwei oder mehr Schraubverbindungen verbunden,
wobei eine erste Schraubverbindung die Mutter umfasst,
wobei eine zweite, insbesondere von der ersten Schraubverbindung beabstandete, Schraubverbindung eine zur Mutter gleichartig ausgeformte Mutter umfasst,
insbesondere wobei die Anzahl der Muttern größer ist als die Anzahl der Haltemittel, insbesondere wobei die Anzahl der Haltemittel Eins beträgt,
insbesondere wobei ein oder das Haltemittel nur an der Mutter der ersten Schraubverbindung angeordnet ist.

Von Vorteil ist dabei, dass für die Schraubverbindungen stets dieselbe Mutter verwendbar ist. Somit muss im Lager nur ein einzelner Typ von Muttern vorrätig gehalten werden. Die Herstellung ist somit in einfacher Weise ermöglicht. Darüber hinaus ist die Lackierung ungestört ausführbar. An einer der Muttern ist das Haltemittel anbringbar, so dass ein Transport auch durch das Lackierbad hindurch ermöglicht ist, wobei die Vorrichtung schwenkbar am Kranhaken angeordnet ist mittels des durch die Mutter dabei gebildeten Drehlagers.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

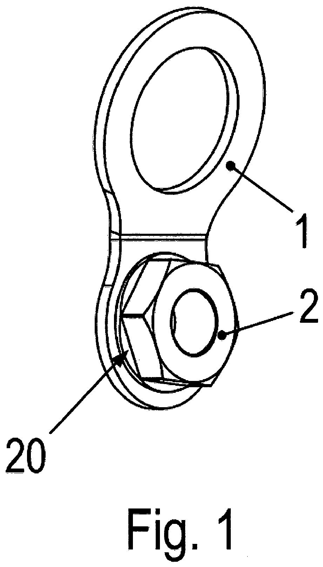

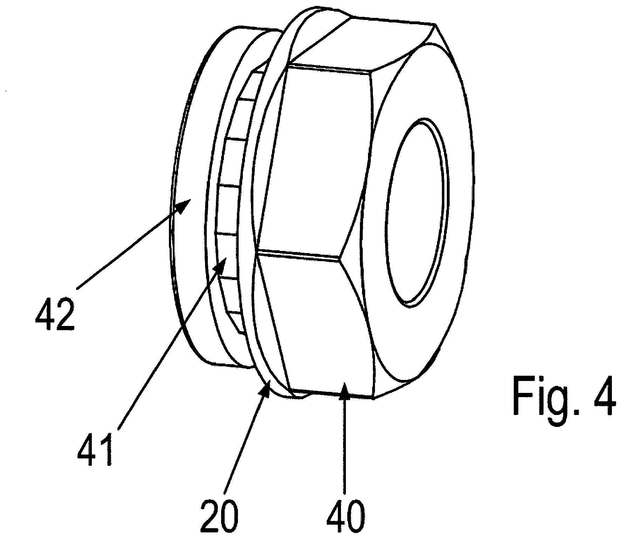

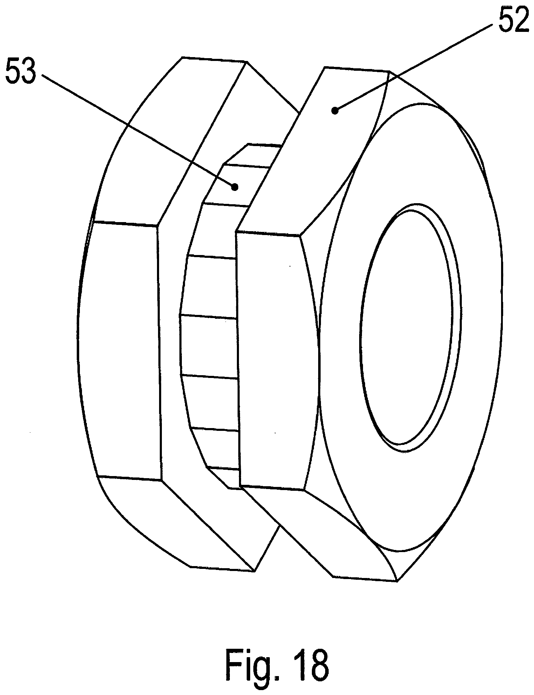

Die Erfindung wird nun anhand von Abbildungen näher erläutert, wobei es sich bei den Ausführungsbeispielen in den Figuren 1 bis 4 sowie 5, 6, 7 und 18 nicht um Ausführungsformen der Erfindung handelt, sondern um Beispiele, welche das Verständnis der Erfindung erleichtern:
In den Figuren 1 bis 4 ist ein erstes Ausführungsbeispiel dargestellt.
   In der Figur 1 ist ein Haltemittel 1 gezeigt, das eine Ose aufweist, in welche ein Kranhaken einhakbar ist, und eine weitere Ausnehmung, die im Wesentlichen oval ausgeführt ist, aus welcher eine Mutter 2 beidseitig herausragt, die eine umlaufende Nut mit polygonal verlaufendem Nutboden aufweist.
   In Figur 2 ist die Mutter 2 teilweise angeschnitten gezeigt, wobei keine Belastung, also keine Hebekraft, vorhanden ist und somit zwei Kantenabschnitte der polygonalen Nutbodens an dazu fast parallelen Abschnitten der weiteren Ausnehmung anliegen, verkeilen und somit kraftschlüssig verbunden sind.
   In der Figur 3 ist im Unterschied zur Figur 2 eine Belastung, also Hebekraft, vorhanden, so dass die Eckbereiche des polygonal verlaufenden Nutbodens an der weiteren Ausnehmung anliegen und ein Gleitlager für eine relative Drehbewegung der Mutter 2 zum Haltemittel 1 bilden, wobei die Drehachse dieser Drehbewegung der Schraubachse der Mutter 2 entspricht.
   In der Figur 4 ist die Mutter 2 des Ausführungsbeispiels nach Figur 1 bis 3 in Schrägansicht separat gezeigt.
In den Figuren 5, 6, 7 und 18 ist ein weiteres Ausführungsbeispiel dargestellt.
   Dabei zeigt Figur 5 ein Haltemittel 51 mit einer sechskantigen Ausnehmung 54, in welcher eine Mutter 52 aufgenommen ist, in Schrägansicht.
   Figur 6 zeigt eine zugehörige Draufsicht.
   Figur 7 zeigt eine zugehörige Schnittansicht.
   Figur 18 zeigt die Mutter 52 in Schrägansicht.

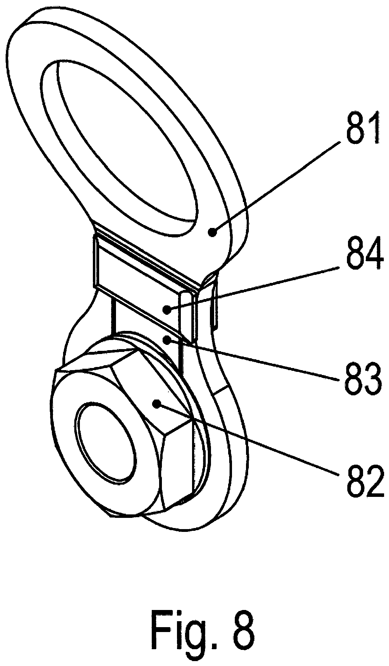

In den Figuren 8 bis 17 ist ein erfindungsgemäßes Ausführungsbeispiel gezeigt.
   Figur 8 zeigt wiederum eine Mutter 82, die durch eine runde Ausnehmung im Haltemittel 81 hindurchragt, in Schrägansicht, wobei ein Schieberabschnitt 83 in eine umlaufende Ringnut, insbesondere in einen Einstich, der Mutter 82 zumindest teilweise hineinragt und somit die Mutter 82 in dem Haltemittel 81 axial sichert.

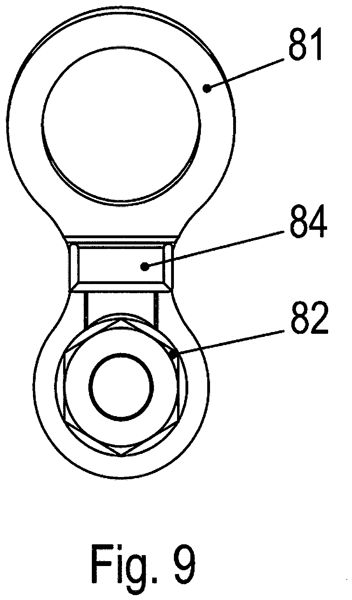

   Figur 9 zeigt eine zugehörige Draufsicht.

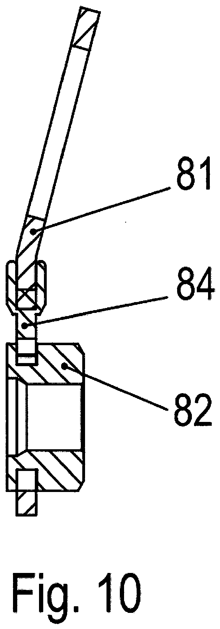

   Figur 10 zeigt eine zugehörige Schnittansicht.

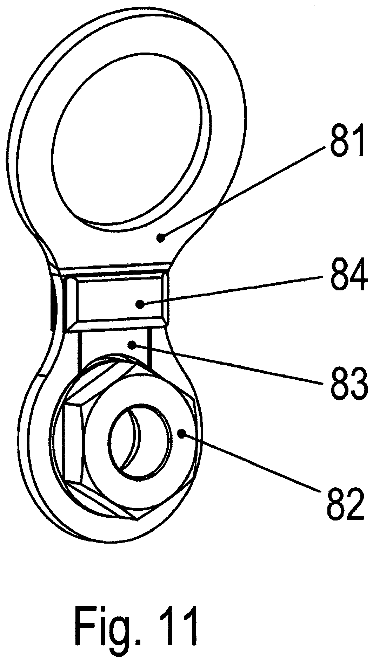

   Figur 11 zeigt das Ausführungsbeispiel in unbelastetem Zustand, wobei die Gewichtskraft das Haltemittel 81 gegen die Mutter 82 drückt und der Schieberabschnitt 83 radial außerhalb der Ringnut der Mutter 82 angeordnet ist.

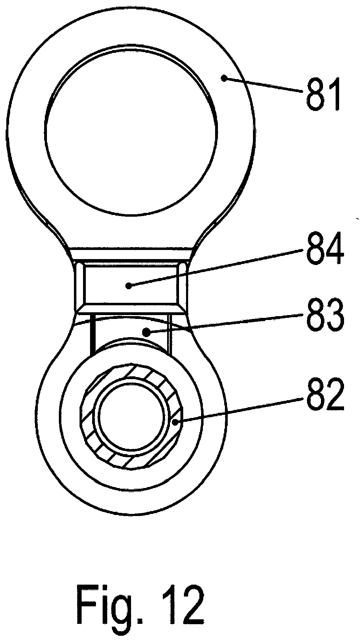

   Figur 12 zeigt eine zugehörige angeschnittene Draufsicht.

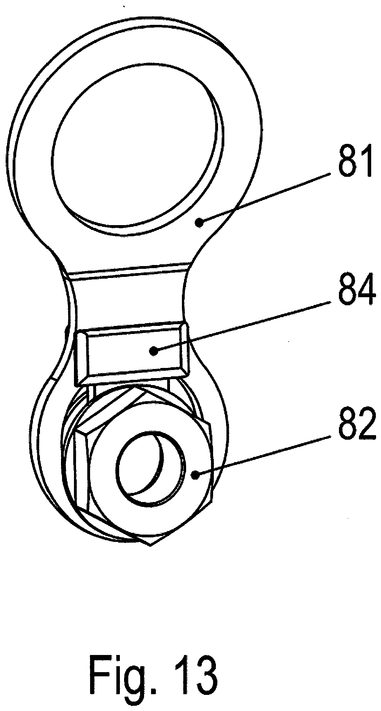

   Figur 13 zeigt das Ausführungsbeispiel in belastetem Zustand, wobei die Gewichtskraft vom Haltemittel 81 überwunden wird und der Schieberabschnitt 83 in die Ringnut hineinragt.

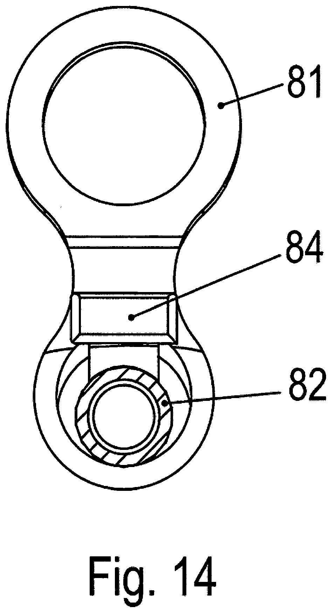

   Figur 14 zeigt eine zugehörige angeschnittene Draufsicht.

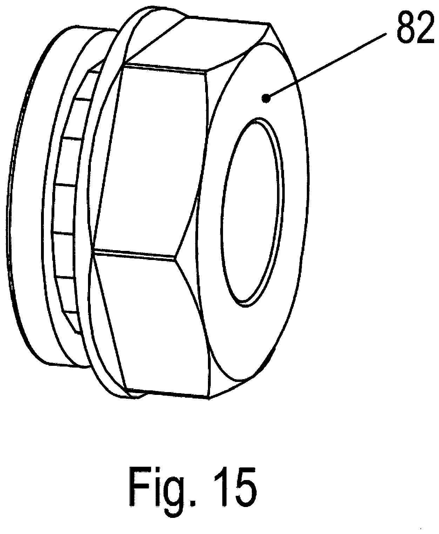

   Figur 15 zeigt die Mutter 82 in Schrägansicht.

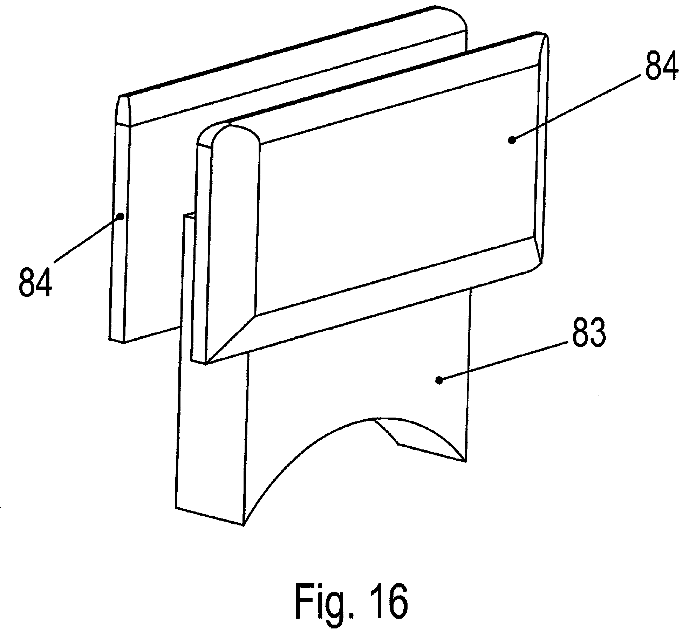

   Figur 16 zeigt das Schiebeteil mit 83 Schieberabschnitt 83 und verbundenem, insbesondere einstückig mit dem Schieberabschnitt 83 ausgeformtem, Griffbereich 84 in Schrägansicht.

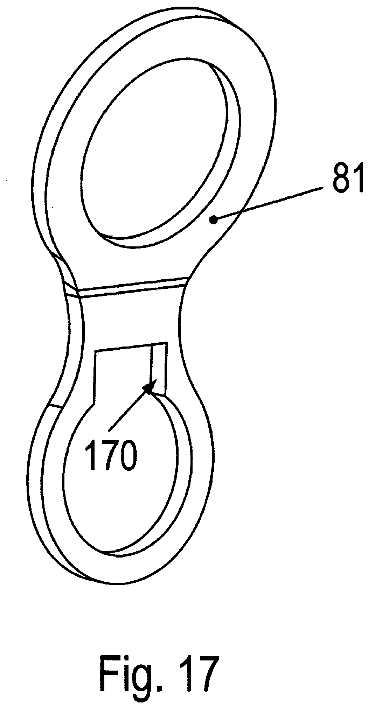

   Figur 17 zeigt das Haltemittel 81 in Schrägansicht.

Wie in den Figuren 1 bis 4 gezeigt, weist das Haltemittel 1 eine Öse auf, also einen ringartigen Abschnitt mit einer runden Ausnehmung, in welche ein Kranhaken oder dergleichen einhakbar ist. Das Haltemittel 1 weist auch eine weitere Ausnehmung auf, welche oval ausgeführt ist. Hierzu weist die weitere Ausnehmung einen Kreisabschnitt mit einem ersten Radius auf und einen Kreisabschnitt mit einem zweiten Radius auf, wobei der zweite größer als der erste Radius ist. Im Übergangsbereich weitet sich die weitere Ausnehmung vom ersten Kreisabschnitt zum zweiten Kreisabschnitt hinauf.

Die Mutter 2 weist einen Außensechskantabschnitt 40 auf, an den sich axial ein Bundabschnitt 20 der Mutter 2 anschließt.

Auf der vom Außensechskantabschnitt 40 abgewandten Seite des Bundabschnitts 20 ist eine umlaufende Nut 41, insbesondere Einstich, mit polygonalem Nutboden vorgesehen. Dabei schließt sich ein weiterer Bundabschnitt 42 an die Nut 41 an, so dass die Nut 41 als radiale Vertiefung ausgeführt ist. Da der Nutboden polygonal ausgeführt ist, weist er jeweilige Abschnitte mit entsprechend jeweiligen Neigungen auf.

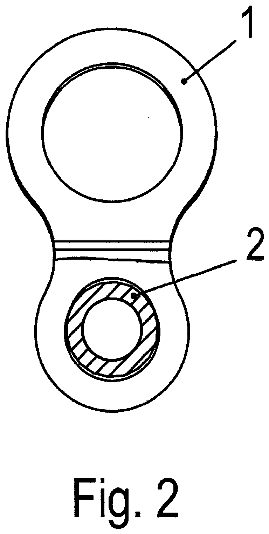

Im unbelasteten Zustand, also ohne Hebekraft, wie in Figur 2 gezeigt, legen sich somit diejenigen Abschnitte fast parallel an den Übergangsbereich an, deren Neigung jeweils parallel zu dem entsprechenden Abschnitt des Übergangsbereichs ist. Dabei drückt die Gewichtskraft des Haltemittels 1 dieses an die Mutter 2.

Die Mutter 2 ist auf einen Gewindestift aufschraubbar, der in einem Gehäuseteil eines Getriebes, eines Elektromotors und/oder eines Getriebemotors eingeschraubt ist. Somit ist die Mutter 2 mit einer entsprechend massereichen Vorrichtung verbunden. Mittels des am Haltemittel 1 eingehakten Kranhakens ist somit die Vorrichtung hängend transportierbar, wobei dann die Gewichtskraft der Vorrichtung die Mutter 2 nach unten zieht und der Kranhaken dem Haltemittel 1 die Gegenkraft zuführen muss.

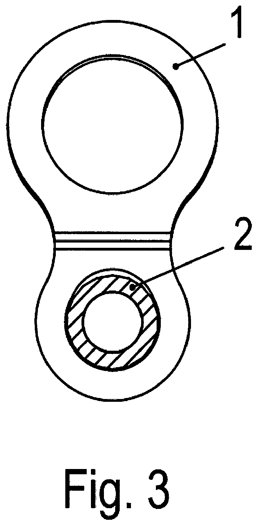

Figur 3 zeigt diesen belasteten Zustand: Dabei liegen dann mehrere Ecken des polygonalen Nutbodens an dem unteren Kreisabschnitt, also dem Kreisabschnitt mit dem größeren Durchmesser, an und bilden ein Gleitlager für die Drehbewegung der Vorrichtung, also auch der Mutter, um eine Drehachse, welche der Schraubgewindeachse des Innengewindes der Mutter 2 entspricht. In Figur 3 ist dies die Normalenebene zur Zeichnungsebene.

Somit ist es ermöglicht, dass beim hängenden Transport die Vorrichtung relativ zum Haltemittel ausgleichende Drehbewegungen ausführt.

Nach Entlastung des Haltemittels 1, insbesondere nach Entfernen des Kranhakens aus der Öse des Haltemittels 1, drückt die Gewichtskraft des Haltemittels 1 dieses nach unten, so dass einige der Eckbereiche polygonalen Nut beabstandet werden von dem Haltemittel und die beiden Übergangsbereiche an entsprechend fast parallel verlaufenden Kanten des polygonal verlaufenden Nutbodens anliegen und somit verkeilen. Dadurch wird das Haltemittel 1 aufrecht gehalten, so dass die Öse oben bleibt, obwohl sie größer ist als die weitere insbesondere ovale Ausnehmung. Der Schwerpunkt des Haltemittels 1 ist als oberhalb des Schwerpunktes der Mutter 2.

Die Mutter 2 wird zur Verbindung mit dem Haltemittel zunächst mit einem Bundabschnitt 20 gefertigt, der radial weniger ausgedehnt ist als die weitere Ausnehmung. Somit ist die Mutter 2 samt Bundabschnitt zunächst durchführbar durch die weitere Ausnehmung des Haltemittels 1. Danach wird aber der Bundabschnitt 20 durch Pressen verformt, so dass er derart radial ausgedehnt ist, dass die Mutter 2 nicht mehr durch die weitere Ausnehmung hindurchführbar ist.

Ebenso wird der weitere Bundabschnitt 42 verformt. Auf diese Weise ist das Haltemittel 1, welches aus einem Blech gefertigt ist, im axialen Bereich der Nut 41 gehalten.

Die Mutter 2 ist also nach dem Verpressen und somit Ausweiten der Bundabschnitte (20 und 42) verliersicher mit dem Haltemittel 1 verbunden, wobei allerdings ein axiales Spiel vorhanden ist.

Das Haltemittel 1 ist aus einem Blech gefertigt, dessen Wandstärke kleiner ist als die axiale Breite der umlaufenden Nut 41 der Mutter 2. Vorzugsweise ist das Haltemittel 1 als StanzBiegeteil aus dem Stahlblech gefertigt.

Mittels der Mutter 2 ist das Haltemittel im axialen Bereich der Nut 41 angeordnet und gehalten und somit axial beabstandet von dem Gehäuseteil der Vorrichtung, in welches der Gewindestift eingeschraubt ist. Somit beim Durchfahren eines Lackierbades ein vom Haltemittel 1 verursachter Lackierschatten vermeidbar. Denn der Lack wird vom Haltemittel 1 nicht gehindert am Erreichen der gesamten, der äußeren Umgebung der Vorrichtung zugewandten Oberfläche des Gehäuseteils der Vorrichtung.

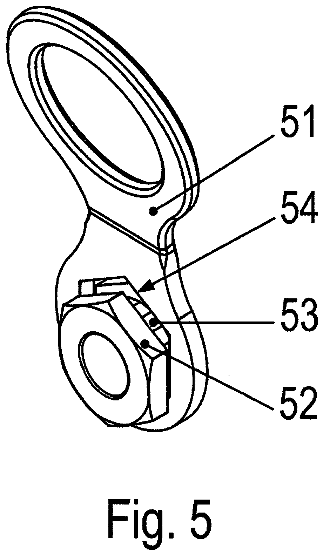

Wie in Figur 5 gezeigt, ist beim zweiten Ausführungsbeispiel die weitere Ausnehmung nicht rund sondern als Innensechskant am Haltemittel 51 ausgeführt.

Die Mutter weist wiederum eine umlaufende Nut 53 auf, insbesondere Einstich, welche axial zwischen zwei Außensechskantbereichen der Mutter 52 angeordnet ist.

Die weitere Ausnehmung am Haltemittel 51 ist als derart großer Innensechskantbereich ausgeführt, dass die Mutter 52 mit einem ihrer oder mit beiden ihrer Außensechskantbereiche hindurchführbar ist.

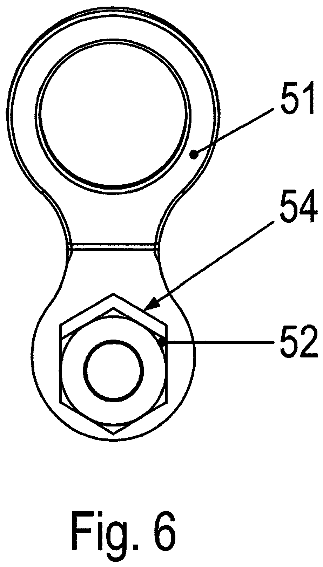

In Figur 6 ist der belastete Zustand gezeigt. Dabei ist die Mutter 52 relativ zum Haltemittel 51 nach unten geschoben, so dass in Draufsicht ein unbedeckter Abschnitt der weiteren Ausnehmung, also des Innensechskantbereichs, gezeigt ist.

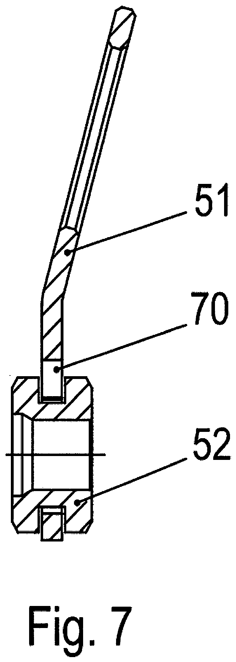

In Figur 7 ist eine Schnittansicht gezeigt, bei der auch das axiale Spiel zwischen Haltemittel 51 und Mutter 52 deutlich gezeigt ist. Aber auch das radiale Spiel 70, welches den unbedeckten Abschnitt der weiteren Ausnehmung umfasst, ist gezeigt.

Bei einem weiteren erfindungsgemäßen Ausführungsbeispiel ist der polygonal verlaufende Nutboden der umlaufenden Nut 53 als runder, insbesondere kreisrunder, also zylindrischer, Nutboden ausgeführt.

Bei dem weiteren Ausführungsbeispiel gemäß Figuren 8 bis 10 ist die weitere Ausnehmung derart groß ausgeführt, dass die Mutter 82 hindurchführbar ist. Insbesondere der Außensechskantbereich der Mutter 82 passt also durch die weitere Ausnehmung axial hindurch, ist also durchführbar.

Die weitere Ausnehmung ist hier wiederum oval ausgeführt mit einer linearen Verlängerung, in welcher das Schiebeteil geführt ist. Wie in Figur 17 gezeigt, bildet die lineare Verlängerung eine Führung 170 für das Schiebeteil. Mittels der umlaufenden Nut ist der Außensechskantbereich der Mutter 82 von einem kreiszylindrischen Abschnitt der Mutter 82 beabstandet.

Der entlastete Zustand ist in den Figuren 11 und 12 dargestellt.

Das Schiebeteil weist einen Schieberabschnitt 83 und zwei voneinander über den Schieberabschnitt 83 beabstandete Griffbereiche 84 auf. Wie in Figur 13 gezeigt, ist das Schiebeteil linear am Haltemittel 81 geführt und derart verschiebbar, dass der Schieberabschnitt 83 in die umlaufende Nut eingreift und auf diese Weise die Mutter 82 am Haltemittel 81 sichert.

In Figur 14 ist dann der belastete Zustand gezeigt, wobei dann also die Gewichtskraft der Vorrichtung von der Mutter 82 aufs Haltemittel 81 wirkt.

Ein nicht gezeigtes Federelement wirkt als rückstellende Kraft auf das Schieberteil 83 und ist am Haltemittel 81 abgestützt.

Die Griffbereiche 84 sind axial beidseitig zum Haltemittel 81 angeordnet und ragen somit axial jeweils über das Haltemittel 81 hervor. Sie sind also mittels des Haltemittels 81 und/oder mittels des Schieberteils 83 axial voneinander beabstandet.

Unter Mutter wird in der vorliegenden Schrift auch ganz allgemein ein schraubteil verstanden, das ein Innengewinde aufweist und einen Außenpolygonabschnitt, insbesondere Außensechskantabschnitt.

Die gezeigten Muttern (2, 52, 82) sind auch in Schraubverbindungen als Muttern verwendbar. Eine Schraubverbindung umfasst dabei beispielsweise einen Gewindestift und eine Mutter. Dabei ist der Gewindestift eingeschraubt in eine Gewindebohrung eines Gehäuseteils der Vorrichtung. Alternativ umfasst die Schraubverbindung einen Gewindestift, welcher durch eine Bohrung des Gehäuseteils und durch eine Bohrung eines weiteren, zu verbindenden Gehäuseteils durchgeführt ist, wobei die Mutter an dem ersten aus dem Gehäuseteil herausragenden Endbereich schraubverbunden ist mit dem Gewindestift und am anderen Endbereich des Gewindestifts eine Mutter schraubverbunden ist, so dass die beiden zu verbindenden Gehäuseteile von den Muttern aufeinander gedrückt werden. Statt des Gewindestifts ist auch eine im Wesentlichen gleich wirkende Schraube verwendbar, wobei die Schraube durch die Bohrungen in den beiden zu verbindenden Gehäuseteilen geführt ist und die erste Mutter auf den Gewindebereich der Schraube geschraubt ist, so dass die beiden zu verbindenden Gehäuseteile zwischen dem Schraubenkopf der Schraube und der Mutter aufeinander zu gedrückt werden.

### Bezugszeichenliste

1 Haltemittel, insbesondere mit Öse
2 Mutter, insbesondere Schraubenmutter
20 Bundabschnitt
40 Außensechskantabschnitt der Mutter 2
41 umlaufende Nut, insbesondere Einstich, mit polygonalem Nutboden
42 weiterer Bundabschnitt
51 Haltemittel, insbesondere mit Öse
52 Mutter, insbesondere Schraubenmutter
53 umlaufende Nut, insbesondere Einstich, mit polygonalem Nutboden
54 Sechskantausnehmung
70 radiales Spiel
81 Haltemittel, insbesondere mit Öse
82 Mutter, insbesondere Schraubenmutter
83 Schieberabschnitt
84 Griffbereich
170 Führungsabschnitte, insbesondere lineare Führungsabschnitte

## Patentansprüche

1. Vorrichtung mit Mutter (2) und Haltemittel (1),
wobei die Mutter mit der Vorrichtung verbunden ist, insbesondere mit einem Gewindestift der Vorrichtung schraubverbunden ist,
**wobei** das Haltemittel eine Öse für einen Transporthaken und eine weitere Ausnehmung aufweist,
wobei die Mutter eine umlaufende Nut (41), insbesondere Einstich, aufweist,
wobei die Mutter durch die weitere Ausnehmung hindurchragt,
**wobei** der von der Berandung der weiteren Ausnehmung überdeckte axiale Bereich von dem von der umlaufenden Nut überdeckten axialen Bereich umfasst ist,
wobei die axiale Richtung die Achse des Innengewindes der Mutter ist,
**dadurch gekennzeichnet, dass**
**der von der Nut überdeckte axiale Bereich größer ist als die Wandstärke, insbesondere Blechdicke oder Blechstärke, des Haltemittels,**
**wobei am Haltemittel ein Schiebeteil** (83, 84) **verschiebbar angeordnet ist,**
**wobei das Schiebeteil in einer ersten Position radial beabstandet ist von der Mutter, insbesondere wobei der von der Mutter überdeckte Radialabstandsbereich beabstandet ist von dem vom Schiebeteil überdeckten Radialabstandsbereich,**
**wobei das Schiebeteil in einer zweiten Position eingreift in die umlaufende Nut, insbesondere in den Einstich, insbesondere zur Bildung einer axialen Sicherung der Mutter am Haltemittel,**
**wobei das Schiebeteil zwischen zwei parallel zueinander ausgeformten Abschnitten der Berandung der weiteren Ausnehmung geführt ist,**
**wobei das Schiebeteil einen Schieberabschnitt aufweist, der zwei Griffbereiche, insbesondere Griffabschnitte, voneinander beabstandet,**
**wobei die Griffbereiche das Schiebeteil am Haltemittel axial sichern und/oder begrenzen.**

2. Vorrichtung nach Anspruch 1,
**dadurch gekennzeichnet, dass**
insbesondere bei Belastung, also unter Wirkung einer auf die Mutter wirkenden, von der Öse weg gerichteten Kraft, der Nutboden gleitgelagert ist in einem Abschnitt der Berandung der weiteren Ausnehmung, insbesondere so dass ein Drehlager gebildet ist, wobei die Drehachse der Schraubgewindeachse des Innengewindes der Mutter entspricht.

3. Vorrichtung nach mindestens einem der vorangegangenen Ansprüche,
**dadurch gekennzeichnet, dass**
der Außensechskantabschnitt der Mutter auf der von der Vorrichtung abgewandten Seite angeordnet ist.

4. Vorrichtung nach mindestens einem der vorangegangenen Ansprüche,
**dadurch gekennzeichnet, dass**
der Nutboden außenpolygonal ausgeformt ist, insbesondere wobei mehr als sechs Ecken vorgesehen sind, oder kreisrund ausgeformt ist.

5. Vorrichtung nach mindestens einem der vorangegangenen Ansprüche,
**dadurch gekennzeichnet, dass**
die Mutter einen oder mehrere Bundabschnitte aufweist zwischen denen die umlaufende Nut angeordnet ist,
insbesondere wobei die Bundabschnitte zumindest abschnittsweise radial weiter ausgedehnt sind als die weitere Ausnehmung des Haltemittels.

6. Vorrichtung nach mindestens einem der vorangegangenen Ansprüche,
**dadurch gekennzeichnet, dass**
die weitere Ausnehmung kreisförmig, ovalförmig oder derart ausgeführt ist, dass ein erster Kreisabschnitt und ein zweiter Kreisabschnitt mittels zumindest eines Übergangsbereichs verbunden sind, wobei der Radius des zweiten Kreisabschnitts kleiner ist als der Radius des ersten Kreisabschnitts.

7. Vorrichtung nach mindestens einem der vorangegangenen Ansprüche,
**dadurch gekennzeichnet, dass**
die weitere Ausnehmung als Innensechskant ausgeführt ist,
insbesondere wobei der Außensechskantabschnitt der Mutter axial durch den Innensechskantabschnitt hindurchführbar ist,
insbesondere wobei die Mutter einen weiteren Außensechskantabschnitt aufweist, der von dem ersten mittels der umlaufenden Nut getrennt ist, insbesondere und denselben Verlauf des maximalen Radialabstandes als Funktion des Umfangswinkels aufweist.

8. Vorrichtung nach mindestens einem der vorangegangenen Ansprüche,
**dadurch gekennzeichnet, dass**
zwei Gehäuseteile mittels zwei oder mehr Schraubverbindungen verbunden sind,
wobei eine erste Schraubverbindung die Mutter umfasst,
wobei eine zweite, insbesondere von der ersten Schraubverbindung beabstandete, Schraubverbindung eine zur Mutter gleichartig ausgeformte Mutter umfasst,
insbesondere wobei die Anzahl der Muttern größer ist als die Anzahl der Haltemittel, insbesondere wobei die Anzahl der Haltemittel Eins beträgt,
insbesondere wobei ein oder das Haltemittel nur an der Mutter der ersten Schraubverbindung angeordnet ist.

## Claims

1. A device having a nut (2) and retaining means (1),
wherein the nut is connected to the device, in particular is connected in a screwed manner to a threaded pin of the device,
wherein the retaining means has an eye for a transport hook and has a further opening,
wherein the nut has an encircling groove (41), in particular recess,
wherein the nut projects through the further opening,
wherein the axial region covered by the boundary of the further opening is encompassed by the axial region covered by the encircling groove,
wherein the axial direction is the axis of the Internal thread of the nut,
**characterized in that**
the axial region covered by the groove is greater than the wall thickness, in particular sheet thickness, of the retaining means,
wherein a sliding part (83, 84) is displaceably arranged on the retaining means,
wherein in a first position, the sliding part is spaced apart radially from the nut, in particular wherein the radial spacing region covered by the nut is spaced apart from the radial spacing region covered by the sliding part,
wherein in a second position, the sliding part engages the encircling groove, in particular the recess, in particular to form an axial securing of the nut to the retaining means,
wherein the sliding part is guided between two parallel portions of the boundary of the further opening,
wherein the sliding part has a slider portion which spaces apart from one another two grip regions, in particular grip portions,
wherein the grip regions axially secure and/or limit the sliding part on the retaining means.

2. A device according to claim 1,
**characterized in that** in particular when loaded, therefore under the effect of a force, directed away from the eye, acting upon the nut, the groove base is mounted in a sliding manner in a portion of the boundary of the further opening, in particular so that a pivot bearing is formed, wherein the rotational axis corresponds to the screw thread axis of the Internal thread of the nut.

3. A device according to at least one of the preceding claims, **characterized in that** the hexagon insert bit portion of the nut is arranged on the side remote from the device.

4. A device according to at least one of the preceding claims, **characterized in that** the groove base is outwardly polygonal, in particular wherein more than six corners are provided, or is circular.

5. A device according to at least one of the preceding claims, **characterized in that** the nut has one or a plurality of collar portions between which there is arranged the encircling groove,
in particular wherein at least portions of the collar portions extend radially further than the further opening of the retaining means.

6. A device according to at least one of the preceding claims,
**characterized in that** the further opening is circular, oval-shaped or such that a first circle segment and a second circle segment are connected by means of at least one transition region, wherein the radius of the second circle segment is smaller than the radius of the first circle segment.

7. A device according to at least one of the preceding claims,
**characterized in that** the further opening is in the form of a hexagon socket in particular wherein the hexagon insert bit portion of the nut can be passed axially through the hexagon socket portion,
in particular wherein the nut has a further hexagon insert bit portion which is separated from the first by means of the encircling groove, and in particular has the same course of the maximum radial spacing as a function of the circumferential angle.

8. A device according to at least one of the preceding claims,
**characterized in that**
two housing parts are connected by means of two or more screw connections,
wherein a first screw connection comprises the nut,
wherein a second screw connection, in particular at a distance from the first screw connection, comprises a nut formed identically to the nut,
in particular wherein the number of the nuts is greater than the number of the retaining means, in particular wherein the number of the retaining means is one,
in particular wherein a or the retaining means is only arranged on the nut of the first screw connection.

## Revendications

1. Dispositif comprenant un écrou (2) et un moyen de retenue (1),
l'écrou étant relié au dispositif, notamment relié par vissage à une tige filetée dudit dispositif,
le moyen de retenue étant muni d'un œillet destiné à un crochet de transport, et d'un évidement supplémentaire,
l'écrou étant pourvu d'une rainure périphérique (41),
en particulier d'une entaille,
lequel écrou traverse l'évidement supplémentaire,
sachant que la région axiale, couverte par la zone marginale dudit évidement supplémentaire, est englobée par la région axiale couverte par ladite rainure périphérique, la direction axiale étant l'axe du filetage intérieur dudit écrou,
**caractérisé par le fait que**
la région axiale couverte par la rainure est supérieure à l'épaisseur de paroi, en particulier à l'épaisseur de la tôle ou à la robustesse de la tôle du moyen de retenue,
sachant qu'une partie coulissante (83, 84) est disposée sur ledit moyen de retenue, avec faculté de déplacement,
laquelle partie coulissante est située radialement à distance de l'écrou, en un premier emplacement,
sachant notamment que la zone d'espacement radial, couverte par l'écrou, se trouve à distance de la zone d'espacement radial couverte par la partie coulissante,
sachant qu'en un second emplacement, ladite partie coulissante pénètre dans la rainure périphérique, notamment dans l'entaille, en particulier de manière à former un arrêt axial dudit écrou sur ledit moyen de retenue,
ladite partie coulissante étant guidée entre deux régions de la zone marginale de l'évidement supplémentaire, qui sont ménagées parallèlement l'une à l'autre,
laquelle partie coulissante comporte une région coulissante qui espace l'une de l'autre deux zones de préhension, notamment des zones offrant prise,
lesquelles zones de préhension assurent l'arrêt axial de ladite partie coulissante sur le moyen de retenue, et/ou sa délimitation.

2. Dispositif selon la revendication 1,
**caractérisé par le fait que**,
lors d'une contrainte en particulier, c'est-à-dire sous l'effet d'une force agissant sur l'écrou et dirigée à l'écart de l'œillet, le fond de la rainure est apte à glisser dans une région de la zone marginale de l'évidement supplémentaire, donnant ainsi notamment naissance à un palier tournant, l'axe de rotation correspondant alors à l'axe du filetage intérieur de vissage de l'écrou.

3. Dispositif selon au moins l'une des revendications précédentes,
**caractérisé par le fait que**
la région hexagonale extérieure de l'écrou est située du côté pointant à l'opposé dudit dispositif.

4. Dispositif selon au moins l'une des revendications précédentes,
**caractérisé par le fait que**
le fond de la rainure est de configuration extérieurement polygonale, plus de six coins étant alors notamment prévus, ou bien de configuration circulaire.

5. Dispositif selon au moins l'une des revendications précédentes,
**caractérisé par le fait que**
l'écrou comporte une, ou plusieurs région(s) formant collerette(s) entre lesquelles la rainure périphérique est interposée,
sachant notamment que l'étendue radiale desdites régions formant collerettes excède, au moins par zones, celle de l'évidement supplémentaire du moyen de retenue.

6. Dispositif selon au moins l'une des revendications précédentes,
**caractérisé par le fait que**
l'évidement supplémentaire présente une réalisation circulaire, ovalisée ou configurée de façon telle qu'un premier tronçon circulaire et un second tronçon circulaire soient reliés à l'aide d'au moins une zone de transition, le rayon dudit second tronçon circulaire étant plus petit que le rayon dudit premier tronçon circulaire.

7. Dispositif selon au moins l'une des revendications précédentes,
**caractérisé par le fait que**
l'évidement supplémentaire est réalisé en tant que configuration à six pans creux,
la région hexagonale extérieure de l'écrou pouvant alors, en particulier, être engagée dans le sens axial à travers la région de configuration à six pans creux,
sachant notamment que ledit écrou est muni d'une région hexagonale extérieure additionnelle séparée de la première région par la rainure périphérique et présentant, en particulier, le même profil d'espacement radial maximal en fonction de l'angle circonférentiel.

8. Dispositif selon au moins l'une des revendications précédentes,
**caractérisé par le fait que**
deux parties de boîtier sont reliées au moyen de liaisons vissées, au nombre de deux ou plus,
une première liaison vissée incluant l'écrou,
sachant qu'une deuxième liaison vissée, notamment distante de ladite première liaison vissée, inclut un écrou de configuration analogue à celle dudit écrou,
sachant, en particulier, que le nombre des écrous est supérieur au nombre des moyens de retenue,
le nombre desdits moyens de retenue étant notamment de l'ordre de l'unité,
sachant notamment qu'un, ou le moyen de retenue, est disposé uniquement sur l'écrou de ladite première liaison vissée.
